# EUROPEAN PATENT APPLICATION

(11) **EP 4 788 012 A1**
(43) Date of publication of application: **05.08.2026**
(21) Application number: 24870684.8
(22) Date of filing: 24.09.2024
(51) Int. Cl.: H04W 72/1263, H04W 24/08

(54) **DATA PROCESSING METHOD AND APPARATUS, AND ELECTRONIC DEVICE**

(30) Priority: 25.09.2023 CN 202311248729
(71) Applicant: VIVO MOBILE COMMUNICATION CO., LTD., Dongguan, Guangdong 523863 (CN)
(72) Inventor: MAO, Yuanze, Dongguan, Guangdong 523863 (CN)
(74) Representative: Conti, Marco
(86) International application number: PCT/CN2024/120582
(87) International publication number: WO 2025/067140

(57) **Abstract**

This application discloses a data processing method and apparatus, and an electronic device, pertaining to the field of communication technology. The method in the embodiments of this application includes: acquiring first status information of a first data packet received by a packet data convergence protocol PDCP layer, where the first status information includes first indication information and second indication information, the first indication information is used to indicate a transmission path of the first data packet in a non-standalone NSA network, and the second indication information is used to indicate whether the first data packet is a data packet subject to a reordering timeout; determining, based on the first status information of the first data packet, whether there exists a first transmission path in the transmission path, where among the data packets transmitted in the first transmission path, there exists a data packet subject to a reordering timeout; and when it is determined that a first transmission path exists within the transmission path, performing reduction processing on a measured channel quality indicator CQI value, and reporting the reduced CQI value, where the CQI value is used to adjust a data packet transmission rate of the first transmission path.

## Description

### CROSS-REFERENCE TO RELATED APPLICATIONS

This application claims priority to Chinese Patent Application No. 202311248729.6 filed in China on September 25, 2023, which is incorporated herein by reference in its entirety.

### TECHNICAL FIELD

This application pertains to the field of communication technology, and specifically relates to a data processing method and apparatus, and an electronic device.

### BACKGROUND

In the related technology, when the downlink split strategy in the non-standalone (Non-standalone, NSA) network is unreasonable, even if the quality of the network is good, the terminal side still experiences severe packet loss problems caused by out-of-order packet data convergence protocol (Packet Data Convergence Protocol, PDCP) counts (count). Since there is no hybrid automatic repeat request (Hybrid Automatic Repeat Request, HARQ)/automatic repeat request (Automatic Repeat Request, ARQ) mechanism at the PDCP layer, even if the terminal side detects obvious packet reception discontinuity/packet loss at the PDCP layer, that is, detects the unreasonable downlink split strategy at the PDCP layer, it cannot directly notify the network side to adjust the downlink transmission strategy.

### SUMMARY

A purpose of the embodiments of this application is to provide a data processing method and apparatus, and an electronic device, which can solve the problem that when a terminal side detects an unreasonable downlink split strategy at a PDCP layer, it cannot notify a network side to adjust the downlink transmission strategy.

In a first aspect, embodiments of this application provide a data processing method executed by an electronic device, where the method includes:
acquiring first status information of a first data packet received by a packet data convergence protocol PDCP layer, where the first status information includes first indication information and second indication information, the first indication information is used to indicate a transmission path of the first data packet in a non-standalone NSA network, and the second indication information is used to indicate whether the first data packet is a data packet subject to a reordering timeout;
determining, based on the first status information of the first data packet, whether there exists a first transmission path in the transmission path, where among the first data packets transmitted in the first transmission path, there exists a data packet subject to a reordering timeout; and
when it is determined that a first transmission path exists within the transmission path, performing reduction processing on a measured channel quality indicator CQI value, and reporting the reduced CQI value, where the CQI value is used to adjust a data packet transmission rate of the first transmission path.

In a second aspect, embodiments of this application provide a data processing apparatus, including:
an acquisition module configured to acquire first status information of a first data packet received by a packet data convergence protocol PDCP layer, where the first status information includes first indication information and second indication information, the first indication information is used to indicate a transmission path of the first data packet in a non-standalone NSA network, and the second indication information is used to indicate whether the first data packet is a data packet subject to a reordering timeout;
a first determining module configured to determine, based on the first status information of the first data packet, whether there exists a first transmission path in the transmission path, where among the first data packets transmitted in the first transmission path, there exists a data packet subject to a reordering timeout; and
a processing module configured to, when it is determined that a first transmission path exists within the transmission path, perform reduction processing on a measured channel quality indicator CQI value, and report the reduced CQI value, where the CQI value is used to adjust a data packet transmission rate of the first transmission path.

In a third aspect, embodiments of this application provide an electronic device, where the electronic device includes a processor and a memory, the memory stores a program or instructions capable of running on the processor, and the program or instructions, when executed by the processor, implement the steps of the method as described in the first aspect.

In a fourth aspect, embodiments of this application provide a readable storage medium, where a program or instructions are stored on the readable storage medium, and the program or instructions, when executed by a processor, implement the steps of the method as described in the first aspect.

In a fifth aspect, embodiments of this application provide a chip, where the chip includes a processor and a communication interface, the communication interface and the processor are coupled, and the processor is configured to run a program or instructions to implement the method as described in the first aspect.

In a sixth aspect, embodiments of this application provide a computer program product, where the computer program product is stored in a storage medium, and the computer program product is executed by at least one processor to implement the method as described in the first aspect.

In the embodiments of this application, first status information of a first data packet received by a PDCP layer is acquired, where the first status information includes first indication information and second indication information, the first indication information is used to indicate a transmission path of the first data packet in an NSA network, and the second indication information is used to indicate whether the first data packet is a data packet subject to a reordering timeout. Based on the first status information of the first data packet, it is determined whether there exists a first transmission path in the transmission path of the NSA network, where among the first data packets transmitted in the first transmission path, there exists a data packet subject to a reordering timeout. When it is determined that a first transmission path exists within the transmission path of the NSA, reduction processing is performed on a measured channel quality indicator CQI value, and the reduced CQI value is reported, where the CQI value is used to adjust a data packet transmission rate of the first transmission path. In this way, a network side can adjust the data packet transmission rate of the NSA transmission path based on the CQI, thereby achieving the purpose of notifying the network side to adjust the split strategy for the transmission path when the terminal detects an unreasonable downlink split strategy at the PDCP layer.

### BRIEF DESCRIPTION OF DRAWINGS

FIG. 1 is a schematic flowchart of a data processing method according to an embodiment of this application;
FIG. 2 is a schematic module diagram of a data processing apparatus according to an embodiment of this application;
FIG. 3 is a first structural block diagram of an electronic device according to an embodiment of this application; and
FIG. 4 is a second structural block diagram of an electronic device according to an embodiment of this application.

### DESCRIPTION OF EMBODIMENTS

The technical solutions in the embodiments of this application will be clearly described below with reference to the accompanying drawings in the embodiments of this application. Obviously, the described embodiments are some embodiments of this application, but not all embodiments. Based on the embodiments in this application, all other embodiments obtained by those of ordinary skill in the art pertain to the scope protected by this application.

The terms "first", "second", and the like in the specification and claims of this application are used to distinguish similar objects and are not used to describe a specific order or sequence. It should be understood that the data used in this way can be interchanged under appropriate circumstances, so that the embodiments of this application can be implemented in sequences other than those illustrated or described herein, and the objects distinguished by "first", "second", and the like are usually of one type and do not limit the number of objects. For example, the first object can be one or more. In addition, in the specification and claims, "and/or" indicates at least one of the connected objects, and the character "/" generally indicates that the preceding and following related objects are in an "or" relationship.

To enable those skilled in the art to better understand the embodiments of this application, the following explanations are first made.

In the related technology, in order to quickly deploy 5G networks, the non-standalone (Non-standalone, NSA) network has developed rapidly. The NSA network is a joint network of long term evolution (Long Term Evolution, LTE) and new radio (New Radio, NR). In the early stage, the NSA network primarily adopts LTE and 5G E-UTRA-NR dual connectivity (E-UTRA-NR Dual Connectivity, EN-DC), where control plane data is carried by LTE, and user plane data is partially or fully carried by NR. Usually in internet access services, user plane data interaction far exceeds control plane data interaction.

When a split bearer (split bearer) is adopted, on the network side, data packets of one packet data convergence protocol (Packet Data Convergence Protocol, PDCP) entity are split to one LTE radio link control (Radio Link Control, RLC) entity and one NR RLC entity for transmission after being counted (count). On the terminal side, the data packets received from the LTE RLC entity and the NR RLC entity are converged to the same NR PDCP entity. The data of one PDCP entity is transmitted in parallel on two paths (path) of LTE and NR.

The NR receiving-end PDCP entity has the following characteristics:
1. Receiving function based on sliding window: The NR PDCP maintains a fixed-length sliding window. Upon receipt of a new data packet, and if the count value of the packet is greater than the count value of any previously received packet, the sliding window is moved to the position where the upper limit value is equal to the count value of the packet (the lower limit value of the sliding window is also updated accordingly). Any subsequently received packet with a count value below the lower limit of the sliding window is directly discarded.
2. Reordering function: The NR PDCP maintains a reordering timer with a fixed total duration. When a new data packet is received, and if the count value of the packet is discontinuous with the count value of the preceding packet received by the PDCP, the packet is temporarily stored in the PDCP layer buffer (buffer), and the reordering timer is started. Before the timer expires, the PDCP layer waits for arrival of the data packets preceding this packet. If the preceding data packets are still not received after the timer expires, the waiting is stopped, and the packet is taken out of the buffer and directly delivered to the upper layer.

When the data split ratio of a certain path (path) in the NSA network is excessively high, the packet reception of the other path may be relatively delayed, and the data packets of the two paths are uniformly counted (count) at the PDCP layer of the network side. On the terminal side, the data packets of the two paths are also converged and reordered at the PDCP layer based on the counts. Therefore, in this scenario, the terminal PDCP layer experiences: the counts of the received packets in the path with a high split ratio show discontinuity, while the counts of the received packets in the path with a low split ratio show delay; and when the delay time exceeds a specific threshold, these delayed packets are directly discarded. For example, the terminal has already received packets with the counts of 5944-5950 in the NR Path, but it receives the packets with the counts of 5903-5912 in the LTE Path much later. This causes the preceding packets in the NR path to be directly delivered to the upper layer after the reordering timer expires, with the receiving window to shift forward. The packets subsequently received in the LTE path then fall outside the receiving window and are thus discarded.

Since there is no HARQ/ARQ mechanism at the PDCP layer, even if the terminal side detects the above obvious packet reception discontinuity/packet loss at the PDCP layer, it cannot directly notify the network side to adjust the downlink transmission strategy.

Below, with reference to the accompanying drawings, the data processing method provided in the embodiments of this application is described in detail through specific embodiments and their application scenarios.

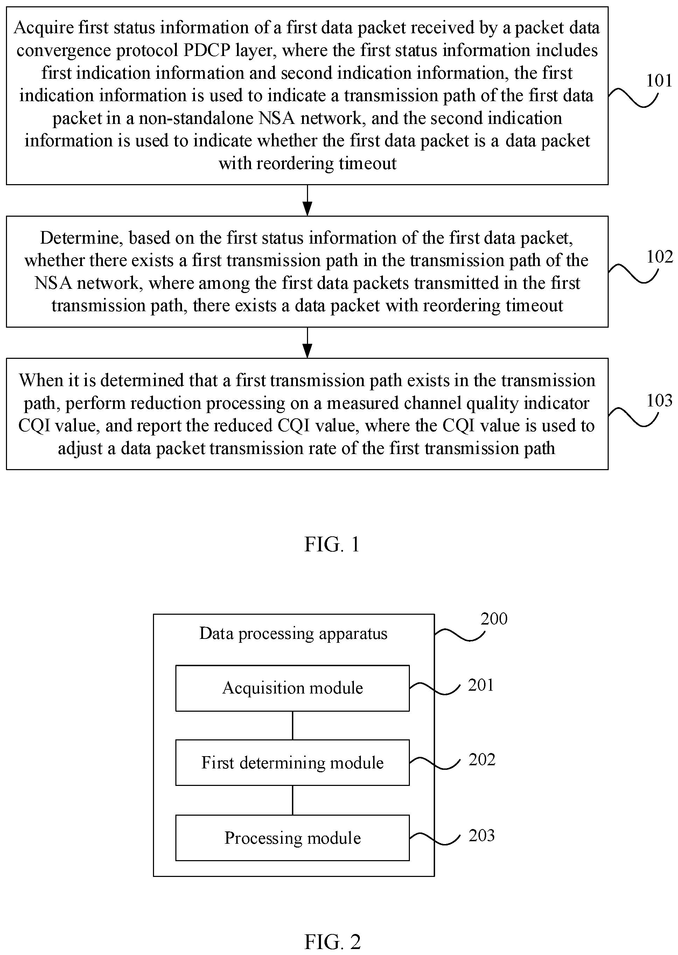

As shown in FIG. 1, an embodiment of this application provides a data processing method executed by an electronic device, where the electronic device may specifically be a terminal. The method includes the following steps.

Step 101: Acquire first status information of a first data packet received by a packet data convergence protocol PDCP layer, where the first status information includes first indication information and second indication information, the first indication information is used to indicate a transmission path of the first data packet in a non-standalone NSA network, and the second indication information is used to indicate whether the first data packet is a data packet subject to a reordering timeout.

Optionally, the first data packet is a data packet of an NSA service, and the first data packet includes W1 data packets, where W1 is a positive integer.

In the embodiments of this application, the terminal records in real time the first status information of each data packet received by the PDCP layer. To save data storage, the W1 data packets are the latest W1 data packets received by the PDCP layer of the terminal.

For example, the terminal may use a fixed-length sliding record window to record the first status information of the latest W1 data packets received by the PDCP layer.

In an example, the first indication information may indicate that the transmission path of the data packet in a non-standalone NSA network is an LTE path or an NR path.

Optionally, in the embodiments of this application, whether a data packet is a data packet subject to a reordering timeout can be determined in the following manner:

Upon receipt of a data packet, if the count value of the packet is discontinuous with the count value of the last data packet, the packet is temporarily stored in the PDCP layer buffer, and the reordering timer is started. Before the timer expires, the PDCP layer waits for arrival of the data packets preceding that packet. If the preceding data packets are still not received after the timer expires, the waiting is stopped, the data packet is taken out of the buffer and directly delivered to the upper layer, and the data packet is determined as a data packet subject to a reordering timeout.

Step 102: Determine, based on the first status information of the first data packet, whether there exists a first transmission path in the transmission path, where among the first data packets transmitted in the first transmission path, there exists a data packet subject to a reordering timeout.

Based on the first status information, it can be determined whether there exists a data packet subject to a reordering timeout in the transmission path of the NSA network. If a certain transmission path has a data packet subject to a reordering timeout, it can be determined that the transmission path has discontinuity of data packet counts due to an excessively high split ratio, which may further cause delay in reception of data packets in the path with an excessively low split ratio. Accordingly, it can be determined that the split strategy for the transmission path in the NSA network is unreasonable.

Step 103: When it is determined that a first transmission path exists within the transmission path, perform reduction processing on a measured channel quality indicator (Channel Quality Indicator, CQI) value, and report the reduced CQI value, where the CQI value is used to adjust a data packet transmission rate of the first transmission path.

Specifically, when it is determined that a first transmission path exists within the transmission path of the NSA network, the terminal actively measures the current environment and signal to obtain the corresponding CQI value, and reduces the CQI value, facilitating the network side device in reducing the data packet transmission rate of the first transmission path based on the reduced CQI value.

In the embodiments of this application, the measured CQI value can be iteratively reduced or reduced by a preset step value, so that the network side reduces the data packet transmission rate of the first transmission path based on the reduced CQI value, thereby reducing the number of data packets transmitted in the first transmission path and achieving the purpose of rate limiting the first transmission path.

In the above solution of the embodiments of this application, first status information of a first data packet received by a PDCP layer is acquired, where the first status information includes first indication information and second indication information, the first indication information is used to indicate a transmission path of the first data packet in an NSA network, and the second indication information is used to indicate whether the first data packet is a data packet subject to a reordering timeout. Based on the first status information of the first data packet, it is determined whether there exists a first transmission path in the transmission path of the NSA network, where among the first data packets transmitted in the first transmission path, there exists a data packet subject to a reordering timeout. When it is determined that a first transmission path exists within the transmission path of the NSA, reduction processing is performed on a measured channel quality indicator CQI value, and the reduced CQI value is reported, where the CQI value is used to adjust a data packet transmission rate of the first transmission path. This enables the network side to adjust the data packet transmission rate of the NSA transmission path based on the CQI, thereby achieving the purpose of notifying the network side to adjust a split strategy for the transmission path when the terminal detects an unreasonable downlink split strategy at the PDCP layer.

Optionally, the step of performing, when it is determined that a first transmission path exists within the transmission path of the NSA network, reduction processing on a measured channel quality indicator CQI value, and reporting the reduced CQI value includes:
when it is determined that a first transmission path exists within the transmission path, acquiring second status information of a second data packet received by the PDCP layer through a second transmission path; where the second status information includes third indication information, and the third indication information is used to indicate whether the second data packet includes a data packet received outside a target time period; and
when it is determined based on the second status information that the second data packet includes a data packet received outside the target time period, adjusting the measured channel quality indicator CQI value and reporting the adjusted CQI value, where the second transmission path is a transmission path different from the first transmission path.

Optionally, the second data packet includes W2 data packets, the second data packet is a data packet of the NSA service, and W2 is a positive integer.

In an implementation, the target time period is a time period corresponding to the receiving window of the second data packet.

Optionally, the second status information further includes a count, and the third indication information is used to indicate whether the second data packet corresponding to the count includes a data packet received outside the target time period.

For example, if the first indication information of a certain data packet received by the PDCP layer indicates that the transmission path is the NR transmission path, and the second indication information of the data packet indicates that the data packet is a data packet subject to a reordering timeout, the NR transmission path is determined as the first transmission path.

In the embodiments of this application, when it is determined that a first transmission path exists within the transmission path of the NSA network, W2 data packets are received continuously and the second status information of the W2 data packets is recorded.

In an implementation, W2 is greater than W1. Specifically, the length of the sliding record window is extended to record the second status information of the latest received W2 data packets based on the extended sliding record window.

The second status information is used to determine whether the second data packet transmitted by the second transmission path includes a data packet received outside the target time period. If the second data packet includes a data packet received outside the target time period, it can be determined that there is packet loss or a large accumulation of PDCP packets. In this case, it can be further determined that the split strategy for the transmission path in NSA is unreasonable. The transmission path where the data packet subject to a reordering timeout occurs has a relatively high split ratio, requiring rate limiting on the transmission path where the data packet subject to a reordering timeout occurs.

In the embodiments of this application, the network side device, after receiving the CQI value reported by the terminal, adjusts the transmission rate of the transmission path of the NSA service currently registered by the terminal within the target time period (for example, within a time period t). During the target time period, the terminal monitors in real time the packet loss rate of data packets received by the PDCP layer per unit time or the number of data packets buffered in the PDCP layer, so as to determine the CQI value where the packet loss rate or the number of buffered data packets in the PDCP layer meets a preset threshold as the target CQI value corresponding to the first transmission path. Subsequently, based on the target CQI value, it can be ensured that the packet loss rate of the PDCP layer of the first transmission path or the number of buffered data packets meets the preset threshold.

In an optional implementation, after the step of performing reduction processing on a measured channel quality indicator CQI value, and reporting the reduced CQI value, the method further includes:
within the target time period, monitoring a target parameter of data packets received by the PDCP layer, where the target parameter includes a packet loss rate or the number of data packets buffered in the PDCP layer; and
in a case that the target parameter is less than a preset threshold, determining the reduced CQI value as a target CQI value corresponding to the target transmission path; or in a case that the target parameter is greater than or equal to a preset threshold, keeping reducing the CQI value and reporting the reduced CQI value until the target parameter of the data packets received by the PDCP layer within the target time period is less than the preset threshold, and determining the CQI value corresponding to the target parameter less than the preset threshold as a target CQI value corresponding to the target transmission path; where
the target CQI value is used to determine the data packet transmission rate of the first transmission path.

In this implementation, the CQI value corresponding to the packet loss rate or the number of data packets buffered in the PDCP layer less than the preset threshold is determined as the target CQI value corresponding to the first transmission path, so that subsequently, based on the target CQI value, it can be ensured that the packet loss rate of the PDCP layer of the first transmission path or the number of buffered data packets is less than the preset threshold, thereby avoiding the problems of PDCP layer data packet out-of-order and packet loss caused by unreasonable NSA downlink split strategy.

Optionally, the method in the embodiments of this application further includes:
reporting the target CQI value corresponding to the first transmission path.

In the embodiments of this application, after the target CQI value is determined, an association relationship between the first transmission path and the target CQI value is established. After the association relationship between the first transmission path and the target CQI value is established, the UE terminal, when performing the NSA service again in the same cell environment, preferentially reports the target CQI value corresponding to the first transmission path to the network, so as to obtain a better or more appropriate split rate, which helps to increase the network rate and reduce the network packet loss rate.

The solution of the embodiments of this application can effectively alleviate the PDCP layer packet loss problem on the terminal side caused by unreasonable downlink split strategy on the network side in NSA, reduce the packet loss rate, and increase the internet access rate.

The data processing method provided in the embodiments of this application may be executed by a data processing apparatus. In the embodiments of this application, the data processing apparatus provided in the embodiments of this application is described by taking the data processing apparatus executing the data processing method as an example.

As shown in FIG. 2, an embodiment of this application further provides a data processing apparatus 200, including:
an acquisition module 201 configured to acquire first status information of a first data packet received by a packet data convergence protocol PDCP layer, where the first status information includes first indication information and second indication information, the first indication information is used to indicate a transmission path of the first data packet in a non-standalone NSA network, and the second indication information is used to indicate whether the first data packet is a data packet subject to a reordering timeout;
a first determining module 202 configured to determine, based on the first status information of the first data packet, whether there exists a first transmission path in the transmission path, where among the first data packets transmitted in the first transmission path, there exists a data packet subject to a reordering timeout; and
a processing module 203 configured to, when it is determined that a first transmission path exists within the transmission path, perform reduction processing on a measured channel quality indicator CQI value, and report the reduced CQI value, where the CQI value is used to adjust a data packet transmission rate of the first transmission path.

Optionally, the processing module includes:
an acquisition submodule configured to, when it is determined that a first transmission path exists within the transmission path, acquire second status information of a second data packet received by the PDCP layer through a second transmission path; where the second status information includes third indication information, and the third indication information is used to indicate whether the second data packet includes a data packet received outside a target time period; and
a processing submodule configured to, when it is determined based on the second status information that the second data packet includes a data packet received outside the target time period, adjust the measured channel quality indicator CQI value and report the adjusted CQI value, where the second transmission path is a transmission path different from the first transmission path.

Optionally, the apparatus in the embodiments of this application further includes:
a monitoring module configured to, within the target time period, monitor a target parameter of data packets received by the PDCP layer, where the target parameter includes a packet loss rate or the number of data packets buffered in the PDCP layer; and
a second determining module configured to, in a case that the target parameter is less than a preset threshold, determine the reduced CQI value as a target CQI value corresponding to the first transmission path; or in a case that the target parameter is greater than or equal to a preset threshold, keep reducing the CQI value and reporting the reduced CQI value until the target parameter of the data packets received by the PDCP layer within the target time period is less than the preset threshold, and determine the CQI value corresponding to the target parameter less than the preset threshold as a target CQI value corresponding to the first transmission path; where
the target CQI value is used to determine the data packet transmission rate of the first transmission path.

Optionally, the apparatus in the embodiments of this application further includes:
a reporting module configured to report the target CQI value corresponding to the first transmission path.

In the above solution of the embodiments of this application, first status information of a first data packet received by a PDCP layer is acquired, where the first status information includes first indication information and second indication information, the first indication information is used to indicate the transmission path of the first data packet in NSA, and the second indication information is used to indicate whether the first data packet is a data packet subject to a reordering timeout. Based on the first status information of the first data packet, it is determined whether there exists a first transmission path in the transmission path of the NSA, where among the first data packets transmitted in the first transmission path, there exists a data packet subject to a reordering timeout. When it is determined that a first transmission path exists within the transmission path of the NSA, reduction processing is performed on a measured channel quality indicator CQI value, and the reduced CQI value is reported, where the CQI value is used to adjust a data packet transmission rate of the first transmission path. This enables the network side to adjust the data packet transmission rate of the NSA transmission path based on the CQI, thereby achieving the purpose of notifying the network side to adjust a split strategy for the transmission path when the terminal detects an unreasonable downlink split strategy at the PDCP layer.

The data processing apparatus in the embodiments of this application may be an electronic device or a component in an electronic device, such as an integrated circuit or a chip. The electronic device may be a terminal or other devices other than the terminal. Exemplarily, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), an automated teller machine, a self-service machine, or the like. This is not specifically limited in the embodiments of this application.

The data processing apparatus in the embodiments of this application may be an apparatus having an operating system. The operating system may be an Android (Android) operating system, an iOS operating system, or other possible operating systems, which is not specifically limited in the embodiments of this application.

The data processing apparatus provided in the embodiments of this application can implement various processes implemented in the method embodiment in FIG. 1. To avoid repetition, details are not described herein again.

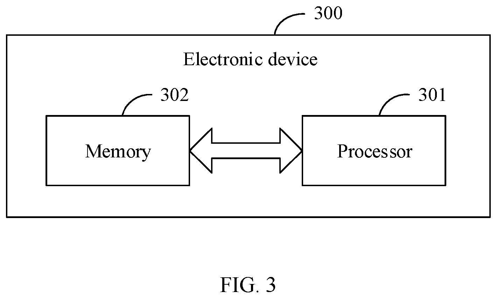

Optionally, as shown in FIG. 3, an embodiment of this application further provides an electronic device 300, including a processor 301 and a memory 302, where a program or instructions capable of running on the processor 301 are stored on the memory 302, and the program or instructions, when executed by the processor 301, implement various steps of the above data processing method embodiments, with the same technical effects achieved. To avoid repetition, details are not described herein again.

It should be noted that the electronic device in the embodiments of this application includes the above-mentioned mobile electronic device and non-mobile electronic device.

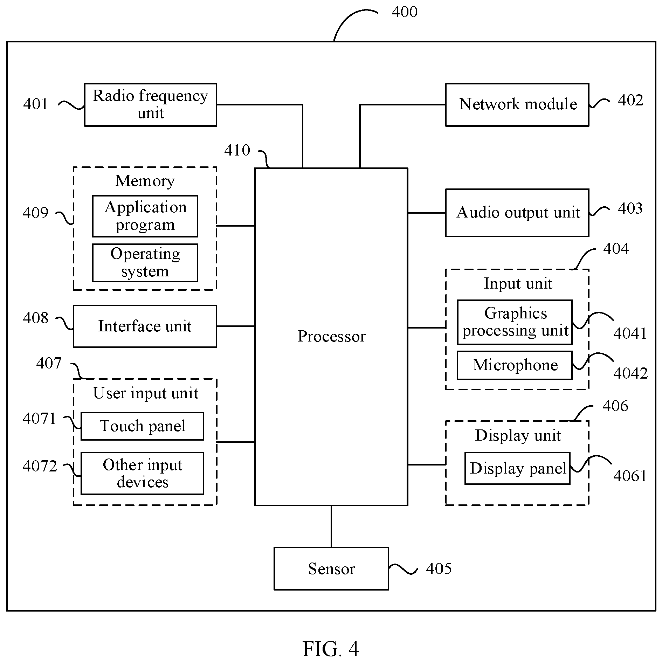

FIG. 4 is a schematic diagram of a hardware structure of an electronic device implementing the embodiments of this application.

The electronic device 400 includes but is not limited to: a radio frequency unit 401, a network module 402, an audio output unit 403, an input unit 404, a sensor 405, a display unit 406, a user input unit 407, an interface unit 408, a memory 409, and a processor 410, and other components.

Those skilled in the art can understand that the electronic device 400 may also include a power source (such as a battery) for supplying power to each component. The power source can be logically connected to the processor 410 through a power management system, thereby implementing functions such as charging management, discharging management, and power consumption management through the power management system. The structure of the electronic device shown in FIG. 4 does not constitute a limitation to the electronic device. The electronic device may include more or fewer components than shown in the figure, or a combination of some components, or the components disposed differently, which is not described herein.

The processor 410 is configured to acquire first status information of a first data packet received by a packet data convergence protocol PDCP layer, where the first status information includes first indication information and second indication information, the first indication information is used to indicate a transmission path of the first data packet in the non-standalone NSA network, the second indication information is used to indicate whether the first data packet is a data packet subject to a reordering timeout; determine, based on the first status information of the first data packet, whether there exists a first transmission path in the transmission path, where among the first data packets transmitted in the first transmission path, there exists a data packet subject to a reordering timeout; and when it is determined that a first transmission path exists within the transmission path, perform reduction processing on a measured channel quality indicator CQI value, and report the reduced CQI value, where the CQI value is used to adjust a data packet transmission rate of the first transmission path.

In the embodiments of this application, first status information of a first data packet received by a PDCP layer is acquired, where the first status information includes first indication information and second indication information, the first indication information is used to indicate a transmission path of the first data packet in NSA, and the second indication information is used to indicate whether the first data packet is a data packet subject to a reordering timeout. Based on the first status information of the first data packet, it is determined whether there exists a first transmission path in the transmission path of the NSA, where among the first data packets transmitted in the first transmission path, there exists a data packet subject to a reordering timeout. When it is determined that a first transmission path exists within the transmission path of the NSA, reduction processing is performed on a measured channel quality indicator CQI value, and the reduced CQI value is reported, where the CQI value is used to adjust a data packet transmission rate of the first transmission path. This enables the network side to adjust the data packet transmission rate of the NSA transmission path based on the CQI, thereby achieving the purpose of notifying the network side to adjust a split strategy for the transmission path when the terminal detects an unreasonable downlink split strategy at the PDCP layer.

Optionally, the processor 410 is further configured to:
when it is determined that a first transmission path exists within the transmission path, acquire second status information of a second data packet received by the PDCP layer through a second transmission path; where the second status information includes third indication information, and the third indication information is used to indicate whether the second data packet includes a data packet received outside a target time period; and
when it is determined based on the second status information that the second data packet includes a data packet received outside the target time period, adjust the measured channel quality indicator CQI value and report the adjusted CQI value, where the second transmission path is a transmission path different from the first transmission path.

Optionally, the processor 410 is further configured to:
within the target time period, monitor a target parameter of data packets received by the PDCP layer, where the target parameter includes a packet loss rate or the number of data packets buffered in the PDCP layer; and
in a case that the target parameter is less than a preset threshold, determine the reduced CQI value as the target CQI value corresponding to the first transmission path; or in a case that the target parameter is greater than or equal to a preset threshold, keep reducing the CQI value and reporting the reduced CQI value until the target parameter of the data packets received by the PDCP layer within the target time period is less than the preset threshold, and determine the CQI value corresponding to the target parameter less than the preset threshold as the target CQI value corresponding to the first transmission path; where
the target CQI value is used to determine the data packet transmission rate of the first transmission path.

Optionally, the processor 410 is further configured to:
report the target CQI value corresponding to the first transmission path.

In the embodiments of this application, first status information of a first data packet received by a PDCP layer is acquired, where the first status information includes first indication information and second indication information, the first indication information is used to indicate a transmission path of the first data packet in NSA, and the second indication information is used to indicate whether the first data packet is a data packet subject to a reordering timeout. Based on the first status information of the first data packet, it is determined whether there exists a first transmission path in the transmission path of the NSA, where among the first data packets transmitted in the first transmission path, there exists a data packet subject to a reordering timeout. When it is determined that a first transmission path exists within the transmission path of the NSA, reduction processing is performed on a measured channel quality indicator CQI value, and the reduced CQI value is reported, where the CQI value is used to adjust a data packet transmission rate of the first transmission path. This enables the network side to adjust the data packet transmission rate of the NSA transmission path based on the CQI, thereby achieving the purpose of notifying the network side to adjust a split strategy for the transmission path when the terminal detects an unreasonable downlink split strategy at the PDCP layer.

It should be understood that in the embodiments of this application, the input unit 404 may include a graphics processing unit (Graphics Processing Unit, GPU) 4041 and a microphone 4042. The graphics processing unit 4041 processes image data of still pictures or videos obtained by an image capture device (such as a camera) in a video capture mode or an image capture mode. The display unit 406 may include a display panel 4061, and the display panel 4061 may be configured in the form of a liquid crystal display, an organic light-emitting diode, or the like. The user input unit 407 includes at least one of a touch panel 4071 and other input devices 4072, and the touch panel 4071 is also referred to as a touchscreen. The touch panel 4071 may include two parts: a touch detection device and a touch controller. The other input devices 4072 may include but are not limited to physical keyboards, function keys (such as a volume control key or an on/off key), trackballs, mice, joysticks, and the like, which are not described herein.

The memory 409 can be configured to store software programs as well as various data. The memory 409 may mainly include a first storage area storing programs or instructions and a second storage area storing data, where the first storage area may store an operating system, application programs or instructions required for at least one function (such as a sound play function or an image play function). In addition, the memory 409 may include a volatile memory or a non-volatile memory, or the memory 409 may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 409 in the embodiments of this application includes but is not limited to these and any other suitable types of memories.

The processor 410 may include one or more processing units; optionally, the processor 410 integrates an application processor and a modem processor, where the application processor mainly processes operations related to the operating system, user interface, and applications, and the modem processor, such as a baseband processor, mainly processes wireless communication signals. It can be understood that the modem processor may not be integrated into the processor 410.

An embodiment of this application further provides a readable storage medium, where a program or instructions are stored on the readable storage medium, and the program or instructions, when executed by a processor, implement various processes of the above data processing method embodiments, with the same technical effects achieved. To avoid repetition, details are not described herein again.

The processor is the processor in the electronic device described in the above embodiments. The readable storage medium includes a computer-readable storage medium, such as a computer read-only memory (ROM), a random access memory (RAM), a magnetic disk, or a compact disc.

Another embodiment of this application provides a chip, where the chip includes a processor and a communication interface, the communication interface and the processor are coupled, and the processor is configured to run a program or instructions to implement various processes of the above data processing method embodiments, with the same technical effects achieved. To avoid repetition, details are not described herein again.

It should be understood that the chip mentioned in the embodiments of this application may also be called a system-level chip, a system chip, a chip system, a system-on-chip, or the like.

An embodiment of this application provides a computer program product, where the computer program product is stored in a storage medium, and the computer program product is executed by at least one processor to implement various processes of the above data processing method embodiments, with the same technical effects achieved. To avoid repetition, they are not described here again.

It should be noted that, in this article, the terms "include", "comprise", or any other variant thereof are intended to cover non-exclusive inclusion, so that a process, method, article, or apparatus that includes a series of elements not only includes those elements, but also includes other elements not explicitly listed, or elements inherent to such process, method, article, or apparatus. Without further limitation, an element defined by the statement "including a ..." does not exclude the presence of additional identical elements in the process, method, article, or apparatus that includes the element. In addition, it should be pointed out that the scope of the methods and apparatuses in the embodiments of this application is not limited to performing functions in the order shown or discussed, and may also include performing functions substantially simultaneously or in reverse order according to the functions involved. For example, the described method may be performed in a different order than the described order, and various steps may also be added, omitted, or combined. In addition, features described with reference to certain examples may be combined in other examples.

Through the description of the above embodiments, those skilled in the art can clearly understand that the method of the above embodiments may be implemented by means of software plus a necessary general hardware platform. Certainly, the method may be also implemented by hardware, but in many cases the former is a better implementation. Based on such understanding, the technical solution of this application essentially or the part that contributes to the related technology can be embodied in the form of a computer software product, and the computer software product is stored in a storage medium (such as a ROM/RAM, a magnetic disk, or a compact disc), including several instructions to make a terminal (which may be a mobile phone, a computer, a server, a network device, or the like) execute the methods described in various embodiments of this application.

The embodiments of this application have been described above with reference to the accompanying drawings, but this application is not limited to the above specific embodiments. The above specific embodiments are merely illustrative rather than restrictive. Those of ordinary skill in the art, under the inspiration of this application, can make many forms without departing from the purpose and scope protected by the claims of this application, all of which pertain to the protection of this application.

## Claims

1. A data processing method, executed by an electronic device, wherein the method comprises:
acquiring first status information of a first data packet received by a packet data convergence protocol PDCP layer, wherein the first status information comprises first indication information and second indication information, the first indication information is used to indicate a transmission path of the first data packet in a non-standalone NSA network, and the second indication information is used to indicate whether the first data packet is a data packet subject to a reordering timeout;
determining, based on the first status information of the first data packet, whether there exists a first transmission path in the transmission path, wherein among the first data packets transmitted in the first transmission path, there exists a data packet subject to a reordering timeout; and
when it is determined that a first transmission path exists within the transmission path, performing reduction processing on a measured channel quality indicator CQI value, and reporting the reduced CQI value, wherein the CQI value is used to adjust a data packet transmission rate of the first transmission path.

2. The method according to claim 1, wherein the performing, when it is determined that a first transmission path exists within the transmission path, reduction processing on a measured channel quality indicator CQI value, and reporting the reduced CQI value comprises:
when it is determined that a first transmission path exists within the transmission path, acquiring second status information of a second data packet received by the PDCP layer through a second transmission path; wherein the second status information comprises third indication information, and the third indication information is used to indicate whether the second data packet comprises a data packet received outside a target time period; and
when it is determined based on the second status information that the second data packet comprises a data packet received outside the target time period, adjusting the measured channel quality indicator CQI value and reporting the adjusted CQI value, wherein the second transmission path is a transmission path different from the first transmission path.

3. The method according to claim 1, wherein after the performing reduction processing on a measured channel quality indicator CQI value, and reporting the reduced CQI value, the method further comprises:
within the target time period, monitoring a target parameter of data packets received by the PDCP layer, wherein the target parameter comprises a packet loss rate or the number of data packets buffered in the PDCP layer; and
in a case that the target parameter is less than a preset threshold, determining the reduced CQI value as a target CQI value corresponding to the first transmission path; or in a case that the target parameter is greater than or equal to a preset threshold, keeping reducing the CQI value and reporting the reduced CQI value until the target parameter of the data packets received by the PDCP layer within the target time period is less than the preset threshold, and determining the CQI value corresponding to the target parameter less than the preset threshold as a target CQI value corresponding to the first transmission path; wherein
the target CQI value is used to determine the data packet transmission rate of the first transmission path.

4. The method according to claim 3, further comprising:
reporting the target CQI value corresponding to the first transmission path.

5. A data processing apparatus, comprising:
an acquisition module configured to acquire first status information of a first data packet received by a packet data convergence protocol PDCP layer, wherein the first status information comprises first indication information and second indication information, the first indication information is used to indicate a transmission path of the first data packet in a non-standalone NSA network, and the second indication information is used to indicate whether the first data packet is a data packet subject to a reordering timeout;
a first determining module configured to determine, based on the first status information of the first data packet, whether there exists a first transmission path in the transmission path, wherein among the first data packets transmitted in the first transmission path, there exists a data packet subject to a reordering timeout; and
a processing module configured to, when it is determined that a first transmission path exists within the transmission path, perform reduction processing on a measured channel quality indicator CQI value, and report the reduced CQI value, wherein the CQI value is used to adjust a data packet transmission rate of the first transmission path.

6. The apparatus according to claim 5, wherein the processing module comprises:
an acquisition submodule configured to, when it is determined that a first transmission path exists within the transmission path, acquire second status information of a second data packet received by the PDCP layer through a second transmission path; wherein the second status information comprises third indication information, and the third indication information is used to indicate whether the second data packet comprises a data packet received outside a target time period; and
a processing submodule configured to, when it is determined based on the second status information that the second data packet comprises a data packet received outside the target time period, adjust the measured channel quality indicator CQI value and report the adjusted CQI value, wherein the second transmission path is a transmission path different from the first transmission path.

7. The apparatus according to claim 5, further comprising:
a monitoring module configured to, within the target time period, monitor a target parameter of data packets received by the PDCP layer, wherein the target parameter comprises a packet loss rate or the number of data packets buffered in the PDCP layer; and
a second determining module configured to, in a case that the target parameter is less than a preset threshold, determine the reduced CQI value as a target CQI value corresponding to the first transmission path; or in a case that the target parameter is greater than or equal to a preset threshold, keep reducing the CQI value and reporting the reduced CQI value until the target parameter of the data packets received by the PDCP layer within the target time period is less than the preset threshold, and determine the CQI value corresponding to the target parameter less than the preset threshold as a target CQI value corresponding to the first transmission path; wherein
the target CQI value is used to determine the data packet transmission rate of the first transmission path.

8. The apparatus according to claim 7, further comprising:
a reporting module configured to report the target CQI value corresponding to the first transmission path.

9. An electronic device, comprising a processor and a memory, wherein the memory stores a program or instructions capable of running on the processor, and the program or instructions, when executed by the processor, implement the steps of the data processing method according to any one of claims 1 to 4.

10. A readable storage medium, wherein a program or instructions are stored on the readable storage medium, and the program or instructions, when executed by a processor, implement the steps of the data processing method according to any one of claims 1 to 4.

11. A chip, wherein the chip comprises a processor and a communication interface, the communication interface and the processor are coupled, and the processor is configured to run a program or instructions to implement the steps of the data processing method according to any one of claims 1 to 4.

12. A computer program product, wherein the computer program product is executed by at least one processor to implement the steps of the data processing method according to any one of claims 1 to 4.

13. An electronic device, configured to perform the steps of the data processing method according to any one of claims 1 to 4.
